# FASCICULE DE BREVET EUROPEEN

(11) **EP 4 320 658 B1**
(45) Date de publication et mention de la délivrance du brevet: **07.05.2025**
(21) Numéro de dépôt: 22710559.0
(22) Date de dépôt: 03.03.2022
(51) Int. Cl.: C25B 1/04, C25B 9/63, C25B 9/75, C25B 9/77, H01M 8/0247, H01M 8/0267, H01M 8/2465, H01M 8/0297, H01M 8/10

(54) **PLAQUE BIPOLAIRE POUR UN EMPILEMENT DE TYPE PILE À COMBUSTIBLE OU DE TYPE ÉLECTROLYSEUR**
BIPOLARPLATTE FÜR EINEN STAPPEL VOM TYP BRENNSTOFFZELLE ODER ELEKTROLYSEUR
BIPOLAR PLATE FOR A STACK OF A FUEL CELL OR AN ELECTROLYZER TYPE

(30) Priorité: 08.04.2021 FR 2103579
(43) Date de publication de la demande: 14.02.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ANDRE, Johan, 38360 Sassenage (FR); SIRAC, Denis, 38360 Sassenage (FR)
(74) Mandataire: Air Liquide
(86) Numéro de dépôt international: PCT/EP2022/055472
(87) Numéro de publication internationale: WO 2022/214250

(56) Documents cités:
- WO-A2-2005/020346
- DE-A1- 102017 125 903
- US-A1- 2008 311 461
- US-A1- 2011 200 913

## Description

La présente invention porte sur une plaque bipolaire pour un empilement de type pile à combustible ou pour un empilement de type électrolyseur, une cellule de pile à combustible ou d'électrolyseur comportant une telle plaque et une pile à combustible ou un électrolyseur comportant une telle cellule.

De façon connue en soi, une pile à combustible est un dispositif électrochimique qui permet de convertir l'énergie chimique en énergie électrique à partir d'un carburant, généralement du dihydrogène, et d'un comburant, généralement du dioxygène ou un gaz en contenant tel que l'air, le produit de la réaction étant l'eau accompagnée d'un dégagement de chaleur et d'une production d'électricité.

Un électrolyseur est basé sur le principe inverse, à savoir un apport d'énergie électrique pour la production de réactions chimiques, par exemple pour la production d'un carburant tel que du dihydrogène et d'un comburant, tel que de l'oxygène. La description qui suit concerne plus particulièrement la pile à combustible, mais pourrait être appliquée à l'électrolyseur.

Une pile à combustible ou un électrolyseur est un empilement de plusieurs cellules, chaque cellule comportant deux plaques bipolaires prenant en sandwich un Assemblage Membrane Électrodes (AME). L'alignement des composants d'un empilement de cellules est réalisé, au moment de l'empilement de chaque plaque bipolaire, soit par l'intérieur, au moyen de guides disposés dans des ouvertures des plaques bipolaires (soit des ouvertures dédiées, soit en exploitant un ou plusieurs collecteurs), soit par l'extérieur, au moyen d'au moins trois axes de guidage venant au contact de bords respectifs de la plaque bipolaire.

L'alignement des composants d'un empilement de plusieurs dizaines voire plusieurs centaines de cellules est délicat. Les différents composants de l'empilement (notamment les plaques bipolaires et l'AME) peuvent en effet avoir tendance à glisser les uns sur les autres, causant ainsi un défaut esthétique, une perte de performance, un défaut d'étanchéité, une moindre tenue aux vibrations. Un mauvais alignement des plaques bipolaires et de l'AME peut aussi augmenter le risque de court-circuit. Le risque est encore plus grand lorsqu'il existe, même localement, une courte distance entre deux points de potentiels différents et qu'un élément conducteur vient combler cet espace (copeau métallique, poussières, ...).

Le document DE 10 2017 125903 A1 divulgue une plaque bipolaire comportant un joint formant une nervure métallique d'étanchéité, avec des embossages dans la plaque, les embossages formant des canaux sensiblement perpendiculaires au joint. Les embossages, formés à l'intérieur de la plaque et non sur la périphérie, ne forment pas un épaulement, et encore moins un épaulement au niveau d'une extrémité périphérique de la plaque.

Le document US 2008/311461 A1 divulgue une pile à combustible à membrane échangeuse de protons (PEMFC), mais s'intéresse plutôt à l'emplacement relatif des collecteurs d'alimentation en carburant, d'alimentation en comburant et d'évacuation du liquide de refroidissement. Les ouvertures sont décalées dans la direction perpendiculaire au plan des piles à combustible.

Lors de la fabrication d'une pile à combustible ou d'un électrolyseur, il est donc nécessaire de procéder à un empilement correct de plaques bipolaires, c'est-à-dire de les aligner correctement selon l'axe de l'empilement.

La présente invention vise à remédier efficacement à ces inconvénients en proposant une plaque bipolaire pour un empilement de type pile à combustible ou pour un empilement de type électrolyseur, la plaque bipolaire comportant une plaque anodique et une plaque cathodique assemblées l'une à l'autre, face contre face, la face de la plaque anodique en vis-à-vis de la face de la plaque cathodique délimitant un espace interne formant un circuit pour la distribution d'un premier fluide, la plaque anodique et la plaque cathodique ayant des dimensions distinctes de sorte qu'au moins une partie de l'extrémité périphérique de la plaque anodique et au moins une partie de l'extrémité périphérique de la plaque cathodique soient décalées l'une par rapport à l'autre dans le plan de la plaque bipolaire , formant un épaulement au niveau d'une extrémité périphérique de la plaque bipolaire.

Une telle configuration permet d'assurer un bon guidage des plaques bipolaires lors de la fabrication d'un empilement et d'empêcher toute formation de court-circuit entre les plaques anodiques et les plaques cathodiques.

Selon une réalisation, les dimensions respectives de la plaque anodique et de la plaque cathodique sont agencées de sorte qu'au moins sur une partie de l'extrémité périphérique de la plaque bipolaire, l'extrémité périphérique de la plaque cathodique et l'extrémité périphérique de la plaque anodique ne sont pas en vis-à-vis.

Selon une réalisation, l'épaulement est considéré perpendiculairement au plan de la plaque bipolaire. En d'autres termes, l'épaulement s'étend sur bord de la plaque bipolaire, au niveau de son épaisseur.

Selon une réalisation, l'extrémité périphérique de la plaque anodique et l'extrémité périphérique de la plaque cathodique ont chacune un bord droit s'étendant perpendiculairement au plan de la plaque bipolaire.

Selon une réalisation, l'épaulement forme une marche ou un créneau.

Selon une réalisation, la plaque bipolaire comporte au moins une zone de guidage pour le guidage de la plaque bipolaire lors de la fabrication d'un empilement, la zone de guidage étant disposée au niveau de l'épaulement, la zone de guidage comportant un bord externe de la plaque bipolaire.

Selon une réalisation, l'épaulement s'étend sur au moins 90% du pourtour de l'extrémité périphérique de la plaque bipolaire.

Selon une réalisation, l'épaulement comprend un angle obtus, notamment compris entre 92° et 100°.

Selon une réalisation, la plaque anodique comporte une première ouverture et la plaque cathodique comporte une deuxième ouverture, la première ouverture et la deuxième ouverture étant en vis-à-vis pour former un collecteur pour permettre le passage du premier fluide ou d'un deuxième fluide à travers la plaque bipolaire, la première ouverture et la deuxième ouverture ayant des dimensions distinctes de sorte qu'au moins une partie de l'extrémité périphérique de la première ouverture et au moins une partie de l'extrémité périphérique de la deuxième ouverture soient décalées l'une par rapport à l'autre dans le plan de la plaque bipolaire, formant un deuxième épaulement au niveau de l'extrémité périphérique du collecteur.

Selon une réalisation, le deuxième épaulement est considéré perpendiculairement au plan de la plaque bipolaire.

Selon une réalisation, le premier fluide est un fluide de refroidissement.

Selon une réalisation, le deuxième fluide est un carburant ou un comburant.

Selon une réalisation, la plaque anodique est issue d'un moulage et au moins un de ses bords comprend un premier angle de dépouille, le premier angle de dépouille étant distinct de l'épaulement.

Selon une réalisation, la plaque cathodique est issue d'un moulage et au moins un de ses bords comprend un deuxième angle de dépouille, le deuxième angle de dépouille étant distinct de l'épaulement.

L'invention concerne en outre une cellule de pile à combustible ou d'électrolyseur comportant deux plaques bipolaires telles que décrites ci-dessus, les plaques bipolaires prenant en sandwich un assemblage membrane électrodes.

Selon une réalisation, l'assemblage membrane électrodes a des dimensions permettant un alignement de l'extrémité périphérique de l'assemblage membrane électrodes et de l'extrémité périphérique de l'une de la plaque anodique et de la plaque cathodique la plus éloignée de l'espace interne, au niveau de l'épaulement.

Selon une réalisation, la plaque bipolaire comporte une portion de l'extrémité périphérique qui est dépourvue d'épaulement, l'assemblage membrane électrode dépassant de l'extrémité périphérique de la plaque bipolaire dans ladite portion, en faisant saillie par rapport à la plaque bipolaire dans le sens du plan de la plaque bipolaire.

L'invention concerne en outre une pile à combustible ou électrolyseur, notamment à membrane échangeuse de protons, comportant un empilement de cellules telles que décrites ci-dessus.

L'invention sera mieux comprise à la lecture de la description qui suit et à l'examen des figures qui l'accompagnent. Ces figures ne sont données qu'à titre illustratif mais nullement limitatif de l'invention.
[Fig.1] La [Fig.1] est une représentation schématique d'une cellule de l'art antérieur ;
[Fig.2] la [Fig.2] est une représentation selon l'axe II-II de la cellule de la [Fig.1] ;
[Fig.3] la [Fig.3] est une représentation schématique en élévation d'une plaque bipolaire selon l'invention ;
[Fig.4] la [Fig.4] est une représentation schématique en coupe, d'une cellule selon l'invention ; et
[Fig.5] la [Fig.5] est une représentation schématique en coupe, d'un autre mode de réalisation de la cellule selon l'invention.

Les éléments identiques, similaires, ou analogues, conservent la même référence d'une figure à l'autre.

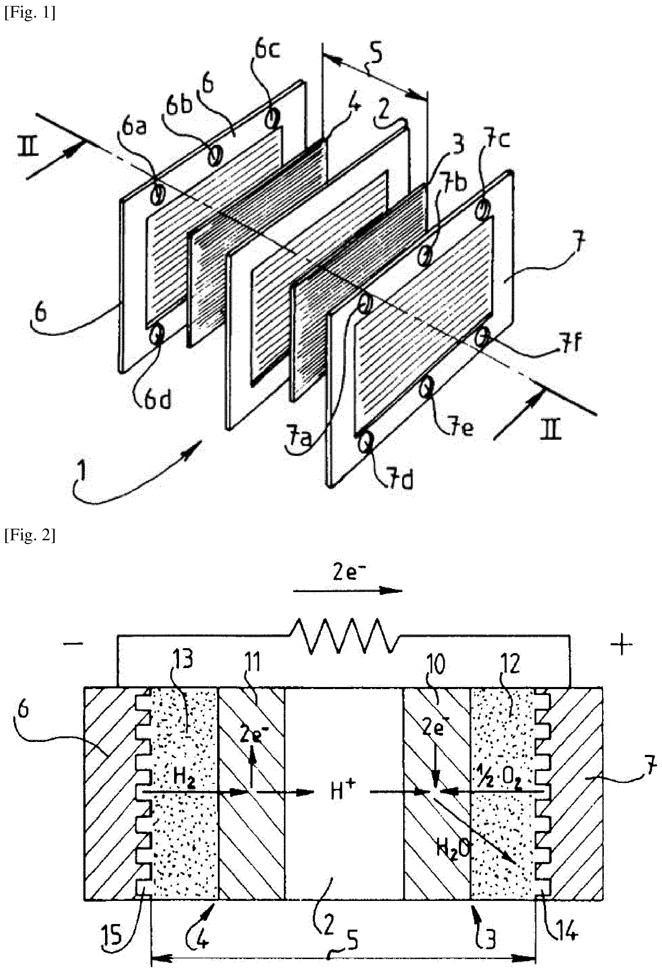

En référence à la [Fig.1] qui représente une cellule 1 de pile à combustible de l'art antérieur, on peut observer qu'une telle cellule 1 comporte un électrolyte conducteur protonique 2 qui est pris en sandwich entre deux électrodes poreuses cathodique 3 et anodique 4 et qui assure le transfert protonique entre ces deux électrodes 3, 4.

A cet effet, l'électrolyte 2 peut être une membrane polymère échangeuse de protons notamment d'épaisseur comprise entre 5 et 200 µm, la pile résultante étant une pile de type PEM (pour « Proton Exchange Membrane ») ou PEMFC (pour « Proton Exchange Membrane Fuel Cell »).

L'ensemble constitué par l'électrolyte 2 et les deux électrodes 3, 4 forme un Assemblage Membrane Électrodes (AME) 5 qui est lui-même pris en sandwich entre des première 6 et deuxième 7 plaques bipolaires qui assurent la collecte du courant, la distribution du comburant et du carburant dans les électrodes 3,4 et la circulation du fluide caloporteur.

Les plaques bipolaires 6,7 couramment utilisées sont réalisées dans des matériaux offrant de bonnes propriétés de résistance à la corrosion et de conductivité électrique, tels que des matériaux carbonés comme du graphite, du graphite imprégné de polymère ou des feuilles de graphite souple mis en forme par usinage ou par moulage.

Il est également possible, pour réaliser les plaques bipolaires 6, 7, d'utiliser des matériaux métalliques tels que des alliages à base de titane, d'aluminium et de fer dont les aciers inoxydables. Dans ce cas, la mise en forme de la plaque bipolaire 6, 7 peut être obtenue par emboutissage ou estampage de feuilles de faible épaisseur.

Afin d'assurer la distribution du comburant, du carburant et du fluide caloporteur dans toutes les cellules constitutives de la pile, la deuxième plaque bipolaire 7 comporte six ouvertures 7a- 7f.

La première plaque bipolaire 6 comporte les mêmes ouvertures disposées aux mêmes endroits que sur la plaque bipolaire 7, la [Fig.1] ne laissant apparaître que quatre ouvertures 6a- 6d.

Les ouvertures 6a- 6d de la première plaque bipolaire 6 et les ouvertures 7a-7f de la deuxième plaque bipolaire 7 sont alignées pour former ainsi des collecteurs assurant la circulation des fluides à travers toutes les cellules constitutives de la pile.

Au niveau de chacune de ces ouvertures 7a-7f, 6a- 6d, un conduit non représenté permet d'alimenter en ou de collecter le fluide caloporteur, le carburant ou le comburant circulant à la surface de la plaque 6,7 ou dans la plaque 6,7 ou dans des canaux de circulation de fluides prévus à cet effet.

En référence à la [Fig.2] qui est une coupe selon la ligne II-II de la [Fig.1], les électrodes cathodique 3 et anodique 4 comportent chacune une couche active respective 10, 11 qui sont le siège des réactions respectivement cathodique et anodique et une couche de diffusion respective 12, 13 intercalée entre la couche active 10, 11 et la plaque bipolaire correspondante 6, 7, cette couche de diffusion 12, 13 pouvant par exemple être un substrat en papier ou un tissu de carbone.

La couche de diffusion 12, 13 assure la diffusion des réactifs tels que le dihydrogène et le dioxygène qui circulent dans les canaux respectifs 14, 15 formés par des rainures réalisées dans les plaques bipolaires respectives 6, 7.

De cette façon, la couche active 11 de l'électrode anodique 4 est alimentée en dihydrogène via la couche de diffusion 13 et la réaction qui se produit dans cette couche active 11 est la suivante: H₂ → 2e⁻ + 2H⁺. De la même façon, la couche active 10 de l'électrode cathodique 3 est alimentée en oxygène via la couche de diffusion 12 et la réaction qui se produit au niveau de cette couche active 10 est la suivante: ½ O₂ + 2H⁺ + 2e⁻ → H₂O. Ces réactions sont rendues possibles par la présence de la membrane 2 qui assure le transfert protonique depuis la couche active 11 de l'anode 4 vers la couche active 10 de la cathode 3.

De façon connue en soi, un empilement de type pile à combustible ou de type électrolyseur, comporte un empilement de cellules 1, une première plaque d'extrémité et une deuxième plaque d'extrémité, l'empilement de cellules 1 étant monté entre les première et deuxième plaques d'extrémité.

Une pile à combustible selon l'invention comporte un empilement (« stack » en anglais) de cellules 1 telles que décrites ci-dessus. Les cellules 1 assurent la collecte du courant, la distribution du comburant et du carburant dans les électrodes et la circulation du fluide caloporteur.

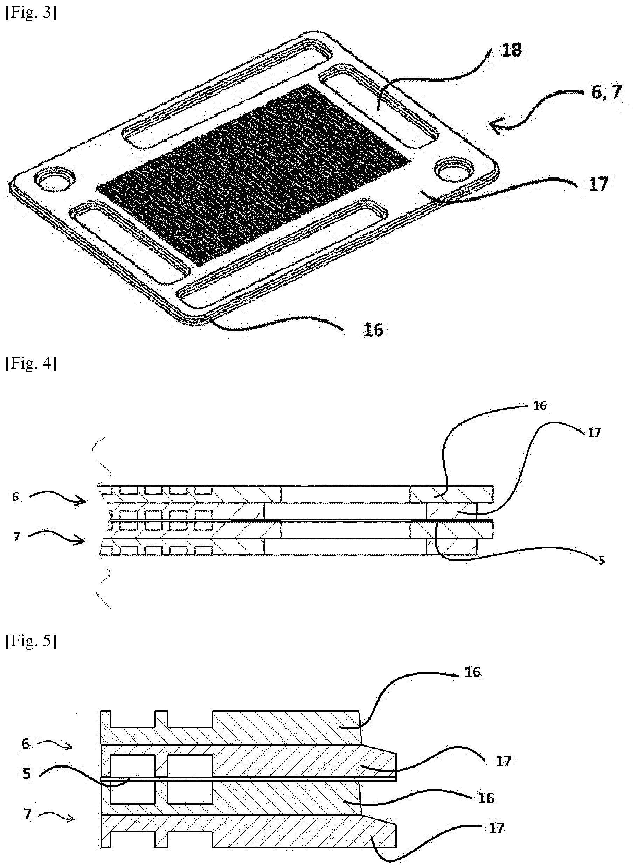

En référence à la [Fig.3], la plaque bipolaire 6, 7 comporte une plaque anodique 16 et une plaque cathodique 17 collées ou soudées face à face en délimitant un espace interne formant un circuit pour la distribution d'un premier fluide. La plaque anodique 16 et la plaque cathodique 17 sont chacune de forme rectangulaire en section (dans l'épaisseur, le bord est droit, c'est-à-dire qu'il s'étend selon une direction perpendiculaire au plan de la plaque).

La face de la plaque anodique 16 en vis-à-vis de la face de la plaque cathodique 17 a des dimensions distinctes de sorte qu'au moins une partie de l'extrémité périphérique de la plaque anodique 16 et au moins une partie de l'extrémité périphérique de la plaque cathodique 17 soient décalées l'une par rapport à l'autre dans le plan de la plaque bipolaire 6, 7, formant un épaulement au niveau d'une extrémité périphérique de la plaque bipolaire 6, 7, l'épaulement étant considéré perpendiculairement au plan de la plaque bipolaire 6, 7.

En d'autres termes, sur au moins une portion de l'extrémité de la plaque bipolaire 6, 7, la plaque anodique 16 ou la plaque cathodique 17 fait saillie par rapport à l'autre.

L'épaulement forme une marche ou créneau.

La plaque bipolaire 6, 7comporte une zone de guidage pour le guidage de la plaque bipolaire 6, 7 lors de la fabrication d'un empilement, la zone de guidage étant disposée au niveau de l'épaulement, la zone de guidage comportant un bord externe de la plaque bipolaire. La zone de guidage est ainsi la portion de l'extrémité de la plaque anodique 16 ou de la plaque cathodique 17 qui fait saillie par rapport à l'autre.

Dans l'exemple de la [Fig.3], l'épaulement s'étend sur la totalité du pourtour de l'extrémité périphérique de la plaque bipolaire 6, 7. En d'autres termes, l'épaulement est continu sur toute la périphérie de la plaque bipolaire 6, 7. Ainsi, le guidage peut s'effectuer sur n'importe quelle portion du pourtour de la plaque.

Dans l'exemple de la [Fig.3], la plaque anodique 16 comporte une première ouverture pour l'entrée ou la sortie d'un deuxième fluide, la plaque cathodique 17 comportant une deuxième ouverture pour l'entrée ou la sortie du deuxième fluide, la première ouverture et la deuxième ouverture étant en vis-à-vis pour former un collecteur 18 pour permettre le passage du deuxième fluide à travers la plaque bipolaire 6, 7. La première ouverture et la deuxième ouverture ont des dimensions distinctes de sorte qu'au moins une partie de l'extrémité périphérique de la première ouverture et au moins une partie de l'extrémité périphérique de la deuxième ouverture soient décalées l'une par rapport à l'autre dans le plan de la plaque bipolaire 6, 7, formant un deuxième épaulement au niveau de l'extrémité périphérique du collecteur 18, le deuxième épaulement étant considéré perpendiculairement au plan de la plaque bipolaire 6, 7.

Dans l'exemple de la [Fig.3], la totalité des bords externes de la plaque bipolaire 6, 7 (les extrémités périphériques de la plaque 6, 7 et les extrémités périphériques des collecteurs 18) comportent un épaulement et chaque épaulement est continu sur tout le pourtour du bord considéré.

La [Fig.4] représente une cellule 1 de pile à combustible ou d'électrolyseur comportant deux plaques bipolaires 6, 7 telles que décrites ci-dessus en lien avec la [Fig.3], les plaques bipolaires 6, 7 prenant en sandwich un assemblage membrane électrodes 5.

L'assemblage membrane électrodes 5 a des dimensions permettant un alignement de l'extrémité périphérique de l'assemblage membrane électrodes 5 et de l'extrémité périphérique de l'une de la plaque anodique 16 et de la plaque cathodique 17 la plus éloignée de l'espace interne, au niveau de l'épaulement. Dans l'exemple considéré, l'AME 5 et la plaque anodique 16 sont alignés bord à bord, au niveau de l'épaulement.

Ainsi les zones de guidages, au niveau de l'épaulement, sont réalisées par les bords périphériques des plaques anodiques 16 qui dépassent par rapport aux plaques cathodiques 17. Il est possible de procéder à un assemblage selon la configuration inverse dans laquelle, l'AME 5 est aligné bord à bord avec la plaque cathodique 17.

La [Fig.5] représente une cellule 1 de pile à combustible ou d'électrolyseur selon un autre mode de réalisation. La différence par rapport à la cellule 1 de la [Fig.4] est que dans ce mode de réalisation, la plaque anodique 16 est issue d'un moulage. Le bord d'extrémité de la première ouverture de la plaque anodique 16 comprend un premier angle de dépouille. Dans l'exemple de la [Fig.5], l'angle de dépouille est situé dans l'épaisseur de la plaque.

La plaque cathodique 17 est elle aussi issue d'un moulage. Le bord d'extrémité de la deuxième ouverture de la plaque cathodique 17 comprend un deuxième angle de dépouille. Le deuxième angle de dépouille est situé dans le plan dans lequel s'étant la plaque cathodique 17.

Dans l'exemple de la [Fig.5], l'épaulement comprend au moins un angle obtus, du fait des angles de dépouille. Dans l'exemple considéré, l'épaulement comprend un angle compris entre 92° et 100°.

## Revendications

1. Plaque bipolaire (6, 7) pour un empilement de type pile à combustible ou pour un empilement de type électrolyseur, la plaque bipolaire (6, 7) comportant une plaque anodique (16) et une plaque cathodique (17) assemblées l'une à l'autre, face contre face, la face de la plaque anodique (16) en vis-à-vis de la face de la plaque cathodique (17) délimitant un espace interne formant un circuit pour la distribution d'un premier fluide, la plaque anodique (16) et la plaque cathodique (17) ayant des dimensions distinctes de sorte qu'au moins une partie de l'extrémité périphérique de la plaque anodique (16) et au moins une partie de l'extrémité périphérique de la plaque cathodique (17) soient décalées l'une par rapport à l'autre dans le plan de la plaque bipolaire (6, 7), formant un épaulement au niveau d'une extrémité périphérique de la plaque bipolaire (6, 7).

2. Plaque bipolaire (6, 7) selon la revendication précédente, l'extrémité périphérique de la plaque anodique (16) et l'extrémité périphérique de la plaque cathodique ayant chacune un bord droit s'étendant perpendiculairement au plan de la plaque bipolaire.

3. Plaque bipolaire (6, 7) selon l'une des revendication précédentes, l'épaulement formant une marche ou un créneau.

4. Plaque bipolaire (6, 7) selon l'une des revendications précédentes, comportant au moins une zone de guidage pour le guidage de la plaque bipolaire (6, 7) lors de la fabrication d'un empilement, la zone de guidage étant disposée au niveau de l'épaulement, la zone de guidage comportant un bord externe de la plaque bipolaire (6, 7).

5. Plaque bipolaire (6, 7) selon l'une des revendications précédentes, l'épaulement s'étendant sur au moins 90% du pourtour de l'extrémité périphérique de la plaque bipolaire (6, 7).

6. Plaque bipolaire (6, 7) selon l'une des revendications précédentes, la plaque anodique (16) comportant une première ouverture, la plaque cathodique (17) comportant une deuxième ouverture, la première ouverture et la deuxième ouverture étant en vis-à-vis pour former un collecteur (18) pour permettre le passage du premier fluide ou d'un deuxième fluide à travers la plaque bipolaire (6, 7), la première ouverture et la deuxième ouverture ayant des dimensions distinctes de sorte qu'au moins une partie de l'extrémité périphérique de la première ouverture et au moins une partie de l'extrémité périphérique de la deuxième ouverture soient décalées l'une par rapport à l'autre dans le plan de la plaque bipolaire (6, 7), formant un deuxième épaulement au niveau de l'extrémité périphérique du collecteur (18).

7. Cellule (1) de pile à combustible ou d'électrolyseur comportant deux plaques bipolaires (6, 7) selon l'une quelconque des revendications précédentes, les plaques bipolaires (6, 7) prenant en sandwich un assemblage membrane électrodes (5).

8. Cellule (1) selon la revendication précédente, l'assemblage membrane électrodes (5) ayant des dimensions permettant un alignement de l'extrémité périphérique de l'assemblage membrane électrodes (5) et de l'extrémité périphérique de l'une de la plaque anodique (16) et de la plaque cathodique (17) la plus éloignée de l'espace interne, au niveau de l'épaulement.

9. Cellule (1) selon l'une des revendications 7 à 8, la plaque bipolaire (6, 7) comportant une portion de l'extrémité périphérique qui est dépourvue d'épaulement, l'assemblage membrane électrode (5) dépassant de l'extrémité périphérique de la plaque bipolaire (6, 7) dans ladite portion, en faisant saillie par rapport à la plaque bipolaire (6, 7) dans le sens du plan de la plaque bipolaire (6, 7).

10. Pile à combustible ou électrolyseur, notamment à membrane échangeuse de protons, comportant un empilement de cellules (1) selon l'une des revendications 7 à 9.

## Patentansprüche

1. Bipolarplatte (6, 7) für einen Stapel vom Typ Brennstoffzelle oder für einen Stapel vom Typ Elektrolyseur, wobei die Bipolarplatte (6, 7) eine Anodenplatte (16) und eine Kathodenplatte (17) umfasst, die Seite gegen Seite zusammengefügt sind, wobei die Seite der Anodenplatte (16), die der Seite der Kathodenplatte (17) gegenüberliegt, einen Innenraum begrenzt, der einen Kreislauf zur Verteilung eines ersten Fluids bildet, wobei die Anodenplatte (16) und die Kathodenplatte (17) unterschiedliche Abmessungen haben, so dass mindestens ein Teil des umfänglichen Endes der Anodenplatte (16) und mindestens ein Teil des umfänglichen Endes der Kathodenplatte (17) in der Ebene der Bipolarplatte (6, 7) zueinander versetzt sind, wodurch eine Schulter an einem umfänglichen Ende der Bipolarplatte (6, 7) gebildet wird.

2. Bipolarplatte (6, 7) nach dem vorhergehenden Anspruch, wobei das umfängliche Ende der Anodenplatte (16) und das umfängliche Ende der Kathodenplatte jeweils eine gerade Kante haben, die sich senkrecht zu der Ebene der Bipolarplatte erstreckt.

3. Bipolarplatte (6, 7) nach einem der vorhergehenden Ansprüche, wobei die Schulter eine Stufe oder eine Zinne bildet.

4. Bipolarplatte (6, 7) nach einem der vorhergehenden Ansprüche, umfassend mindestens einen Führungsbereich zum Führen der Bipolarplatte (6, 7) bei der Herstellung eines Stapels, wobei der Führungsbereich an der Schulter angeordnet ist, wobei der Führungsbereich eine Außenkante der Bipolarplatte (6, 7) umfasst.

5. Bipolarplatte (6, 7) nach einem der vorhergehenden Ansprüche, wobei sich die Schulter über mindestens 90 % des Umfangs des umfänglichen Endes der Bipolarplatte (6, 7) erstreckt.

6. Bipolarplatte (6, 7) nach einem der vorhergehenden Ansprüche, wobei die Anodenplatte (16) eine erste Öffnung umfasst, wobei die Kathodenplatte (17) eine zweite Öffnung aufweist, wobei die erste Öffnung und die zweite Öffnung einander gegenüberliegen, um einen Kollektor (18) zu bilden, um den Durchgang des ersten Fluids oder eines zweiten Fluids durch die Bipolarplatte (6, 7) hindurch zu ermöglichen, wobei die erste Öffnung und die zweite Öffnung unterschiedliche Abmessungen haben, so dass mindestens ein Teil des umfänglichen Endes der ersten Öffnung und mindestens ein Teil des umfänglichen Endes der zweiten Öffnung in der Ebene der Bipolarplatte (6, 7) zueinander versetzt sind, wodurch eine zweite Schulter an dem umfänglichen Ende des Kollektors (18) gebildet wird.

7. Brennstoff- oder Elektrolyseurzelle (1), umfassend zwei Bipolarplatten (6, 7) nach einem der vorhergehenden Ansprüche, wobei die Bipolarplatten (6, 7) eine Membran-Elektroden-Anordnung (5) sandwichartig aufnehmen.

8. Zelle (1) nach dem vorhergehenden Anspruch, wobei die Membran-Elektroden-Anordnung (5) Abmessungen hat, die ein Ausrichten des umfänglichen Endes der Membran-Elektroden-Anordnung (5) und des umfänglichen Endes von einer unter der Anodenplatte (16) und der Kathodenplatte (17), die am weitesten von dem Innenraum entfernt ist, an der Schulter ermöglichen.

9. Zelle (1) nach einem der Ansprüche 7 bis 8, wobei die Bipolarplatte (6, 7) einen Abschnitt des umfänglichen Endes umfasst, der keine Schulter aufweist, wobei die Membran-Elektroden-Anordnung (5) in diesem Abschnitt das umfängliche Ende der Bipolarplatte (6, 7) überragt, wobei sie in Bezug auf die Bipolarplatte (6, 7) in Richtung der Ebene der Bipolarplatte (6, 7) vorsteht.

10. Brennstoff- oder Elektrolyseurzelle, insbesondere mit Protonenaustauschmembran, die einen Stapel von Zellen (1) nach einem der Ansprüche 7 bis 9 umfasst.

## Claims

1. Bipolar plate (6, 7) for a fuel cell stack or for an electrolyser stack, the bipolar plate (6, 7) having an anode plate (16) and a cathode plate (17) which are joined to one another face-to-face, the face of the anode plate (16) that faces the face of the cathode plate (17) delimiting an internal space that forms a circuit for the distribution of a first fluid, the anode plate (16) and the cathode plate (17) having distinct dimensions such that at least part of the peripheral end of the anode plate (16) and at least part of the peripheral end of the cathode plate (17) are offset in relation to one another in the plane of the bipolar plate (6, 7), forming a shoulder at a peripheral end of the bipolar plate (6, 7).

2. Bipolar plate (6, 7) according to the preceding claim, the peripheral end of the anode plate (16) and the peripheral end of the cathode plate each having a straight edge extending perpendicularly to the plane of the bipolar plate.

3. Bipolar plate (6, 7) according to either of the preceding claims, the shoulder forming a step or a crenelation.

4. Bipolar plate (6, 7) according to one of the preceding claims, having at least one guide zone for guiding the bipolar plate (6, 7) during the manufacture of a stack, the guide zone being disposed at the shoulder, the guide zone including an outer edge of the bipolar plate (6, 7).

5. Bipolar plate (6, 7) according to one of the preceding claims, the shoulder extending over at least 90% of the perimeter of the peripheral end of the bipolar plate (6, 7).

6. Bipolar plate (6, 7) according to one of the preceding claims, the anode plate (16) having a first opening, the cathode plate (17) having a second opening, the first opening and the second opening facing one another so as to form a collector (18) for allowing the passage of the first fluid or a second fluid through the bipolar plate (6, 7), the first opening and the second opening having distinct dimensions such that at least part of the peripheral end of the first opening and at least part of the peripheral end of the second opening are offset in relation to one another in the plane of the bipolar plate (6, 7), forming a second shoulder at the peripheral end of the collector (18).

7. Cell (1) for a fuel cell stack or an electrolyser, having two bipolar plates (6, 7) according to any one of the preceding claims, wherein the bipolar plates (6, 7) sandwich a membrane electrode assembly (5).

8. Cell (1) according to the preceding claim, the membrane electrode assembly (5) having dimensions which make it possible to align the peripheral end of the membrane electrode assembly (5) and the peripheral end of that one of the anode plate (16) and the cathode plate (17) that is furthest away from the internal space, at the shoulder.

9. Cell (1) according to either of Claims 7 and 8, the bipolar plate (6, 7) having a portion of the peripheral end which does not have a shoulder, the membrane electrode assembly (5) projecting from the peripheral end of the bipolar plate (6, 7) in this portion by protruding beyond the bipolar plate (6, 7) in the direction of the plane of the bipolar plate (6, 7).

10. Fuel cell stack or electrolyser, notably with a proton exchange membrane, having a stack of cells (1) according to one of Claims 7 to 9.
